# EUROPEAN PATENT APPLICATION

(11) **EP 4 693 583 A1**
(43) Date of publication of application: **11.02.2026**
(21) Application number: 23929459.8
(22) Date of filing: 31.03.2023
(51) Int. Cl.: H01M 10/0587, H01M 10/04

(54) **BATTERY**

(71) Applicant: Ningde Amperex Technology Limited, Ningde, Fujian 352100 (CN)
(72) Inventor: LI, Yong, Ningde, Fujian 352100 (CN); XIAO, Liangzhen, Ningde, Fujian 352100 (CN); ZENG, Qiao, Ningde, Fujian 352100 (CN)
(74) Representative: Icosa
(86) International application number: PCT/CN2023/085645
(87) International publication number: WO 2024/197876

(57) **Abstract**

Some embodiments of this application relate to the field of battery technologies and particularly disclose a battery. The battery includes a housing, an electrode assembly, and a first conductive plate, where the housing includes a first recess; the electrode assembly is disposed in the first recess, the electrode assembly includes a first electrode plate, a second electrode plate, and a separator disposed between the first electrode plate and the second electrode plate, the electrode assembly is formed by winding the first electrode plate, the second electrode plate, and the separator around a winding axis, and the electrode assembly includes a central portion; and the first conductive plate includes a main body portion and a plurality of connection portions arranged in an array around the main body portion, and ends of the connection portions are all spaced apart from each other and each are connected to the first electrode plate. The first conductive plate is connected to a bottom of the first recess; and along a winding axis direction, the first conductive plate is disposed between the bottom of the first recess and the electrode assembly, and an orthographic projection of the first conductive plate overlaps with an orthographic projection of the central portion.

## Description

### TECHNICAL FIELD

Some embodiments of this application relate to the field of battery technologies, and in particular, to a battery.

### BACKGROUND

In recent years, with the continuous development of markets such as hybrid vehicles, battery electric vehicles, and electric motorcycles, the role of batteries has become increasingly significant. The scale of battery packs, that is, the number of batteries integrated in each pack, has been growing, leading to higher demands for power output characteristics and reliability of batteries. Among them, full-tab cylindrical lithium-ion batteries, compared to other batteries, have advantages such as low equipment investment, high production efficiency, and low comprehensive cost. In particular, full-tab batteries, due to their excellent power performance, low internal resistance, low heat generation, long cycle life, and ability to break through capacity bottlenecks, have received significant attention in the industry and have progressively achieved industrialization.

Currently, the impedance of full-tab structure batteries is relatively high, which affects the service life of the batteries.

### SUMMARY

In view of the above issues, some embodiments of this application aim to provide a battery to reduce battery impedance and prolong the service life of the battery.

In view of this, this application provides a battery including a housing, an electrode assembly, and a first conductive sheet, where the housing includes a first recess; the electrode assembly is disposed in the first recess; the electrode assembly includes a first electrode plate, a second electrode plate, and a separator disposed between the first electrode plate and the second electrode plate; the electrode assembly is formed by winding the first electrode plate, the second electrode plate, and the separator around a winding axis; the electrode assembly includes a central portion; the first conductive plate includes a main body portion and a plurality of connection portions arranged in an array around the main body portion; ends of the connection portions are spaced apart and each are connected to the first electrode plate; the first conductive plate is connected to a bottom of the first recess; and along a winding axis direction, the first conductive plate is disposed between the first recess and the electrode assembly, and an orthographic projection of the first conductive plate overlaps with an orthographic projection of the central portion. Through the arrangement of the plurality of connection portions, the current collection effect can be enhanced, the plurality of connection portions arranged in an array around the main body portion can ensure current uniformity. Additionally, through the connection of the main body portion to the housing, an electron flow path is shortened, thereby reducing the internal resistance of the battery and prolonging the service life of the battery.

In some embodiments, along the winding axis direction, an orthographic projection of the main body portion overlaps with the orthographic projection of the central portion, so that the plurality of connection portions are axially symmetric with respect to the central portion, further improving current uniformity.

In some embodiments, along the winding axis direction, the plurality of connection portions are all spaced apart from the central portion, that is, a projection of the main body portion is located within a projection of the central portion, so that an orthographic projection of a cross-section of the first conductive plate perpendicular to the winding axis direction is distributed from a center to an edge, facilitating electrolyte infiltration effect of the electrode assembly from the center to the edge.

In some embodiments, the plurality of connection portions are welded to the first electrode plate.

In some embodiments, along the winding axis direction, the electrode assembly includes a first end, the first end faces the first conductive plate, and the first end includes a first surface formed on the first electrode plate.

In some embodiments, the electrode assembly includes a second recess, the second recess is disposed on the first surface, and the plurality of connection portions are connected to the first electrode plate at the second recess.

In some embodiments, along the winding axis direction, the first conductive plate includes a first face, the first face faces the first surface, and the main body portion is located on the first face.

In some embodiments, the first face is provided with a third recess.

In some embodiments, the first conductive plate further includes a welding portion, and the welding portion is located on the main body portion.

In some embodiments, the plurality of connection portions include a first connection portion, a second connection portion, and a third connection portion, and the first connection portion, the second connection portion, and the third connection portion are arranged in an array around the main body portion.

In some embodiments, the first conductive plate includes a first region, a second region, and a third region, where the first region extends from the central portion along a first direction perpendicular to the winding axis direction, the second region extends from the central portion along a second direction perpendicular to the winding axis direction, the third region extends from the central portion along a third direction perpendicular to the winding axis direction, the first connection portion is located in the first region, the second connection portion is located in the second region, and the third connection portion is located in the third region.

In some embodiments, an angle between any two of the first direction, the second direction, and the third direction is an obtuse angle.

In some embodiments, the angle between any two of the first direction, the second direction, and the third direction is 120 degrees, so that the first connection portion, the second connection portion, and the third connection portion have rotational symmetry with respect to the main body portion, resulting in more balanced stress after welding, and preventing stress from being generated.

In some embodiments, the first region includes a first edge extending along the first direction, a second edge spaced apart from the first edge and extending along the first direction, and a third edge connected between the first edge and the second edge; the second region includes a fourth edge connected to the second edge and extending along the second direction, a fifth edge spaced apart from the fourth edge and extending along the second direction, and a sixth edge connected between the fourth edge and the fifth edge; and the third region includes a seventh edge connected to the fifth edge and extending along the third direction, an eighth edge spaced apart from the seventh edge, connected to the first edge, and extending along the third direction, and a ninth edge connected between the seventh edge and the eighth edge.

In some embodiments, the first conductive plate includes a first conductive edge, a second conductive edge, and a third conductive edge, where the first conductive edge includes the first edge and the eighth edge, the second conductive edge includes the second edge and the fourth edge, and the third conductive edge includes the fifth edge and the seventh edge; and along the winding axis direction, the first conductive edge, the second conductive edge, and the third conductive edge are all recessed toward the main body portion, which is conducive to reducing sharp portions of the first conductive plate, reducing burrs, and facilitating the subsequent inflow of an electrolyte.

In some embodiments, the welding portion and the connection portion are located in the same plane.

In some embodiments, the welding portion and the connection portion are located in different planes, which facilitates welding of the first conductive plate to the housing.

In some embodiments, along the winding axis direction, the welding portion is inclined toward a bottom of the housing, which facilitates connection of the first conductive plate to the housing.

In some embodiments, the battery further includes a cap, a second conductive sheet, and an insulating member, where the cap is disposed on a top of the housing to seal the first recess, the cap is provided with a pole, one end of the second conductive sheet is connected to the pole, another end of the second conductive sheet is connected to the second electrode plate, and the insulating member is disposed between the cap and the pole.

### BRIEF DESCRIPTION OF THE DRAWINGS

To describe the technical solutions in some embodiments of this application more clearly, the following briefly describes the accompanying drawings required for describing some embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic mounting diagram of a housing, a first conductive plate, and an electrode assembly in a battery according to an embodiment of this application;
FIG. 2 is a cross-sectional view of the battery shown in FIG. 1 along line A-A;
FIG. 3 is a schematic enlarged view of part B in FIG. 2;
FIG. 4 is a schematic exploded view of FIG. 2;
FIG. 5 is a schematic mounting diagram of the housing and the first conductive plate in the battery shown in FIG. 1;
FIG. 6 is a schematic mounting diagram of a housing and a first conductive plate in a battery according to another embodiment;
FIG. 7 is a schematic mounting diagram of a housing and a first conductive plate in a battery according to another embodiment; and
FIG. 8 is a schematic mounting diagram of a housing and a first conductive plate in a battery according to another embodiment.

### DETAILED DESCRIPTION

The following clearly describes in detail the technical solutions in some embodiments of this application. Apparently, the described embodiments are only some rather than all of embodiments of this application. Unless otherwise defined, all technical and scientific terms used herein shall have the same meanings as commonly understood by persons skilled in the art to which this application belongs. The terms used in the specification of this application are intended to merely describe the specific embodiments rather than to limit this application.

The following describes some embodiments of this application in detail. However, this application may be embodied in many different implementations and should not be construed as being limited to the example embodiments set forth herein. Rather, these example embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the descriptions of some embodiments of this application means "one or more embodiments of this application".

The technical terms used herein are merely intended to describe specific embodiments rather than to limit this application. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be subject to limitations by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

As used herein, terms "parallel" and "perpendicular" are used to describe an ideal state between two components. During actual production or use, two components may be approximately parallel or perpendicular to each other. For example, with reference to numerical values, "being parallel" may indicate that an included angle between two straight lines is within a range of -10° to +10°, "being parallel" may indicate that a dihedral angle of two planes is within a range of -10° to +10°, and "being parallel" may also indicate that an included angle between a straight line and a plane is within a range of -10° to +10°. "Being perpendicular" may indicate that an included angle between two straight lines is within a range of 90°±10°, "being perpendicular" may indicate that a dihedral angle of two planes is within a range of 90°±10°, and "being perpendicular" may also indicate that an included angle between a straight line and a plane is within a range of 90°±10°. Two components described as "being parallel" or "being perpendicular" to each other may not be absolutely straight lines or planes, and may be approximately straight lines or planes. From a macroscopic perspective, the component can be considered as a "straight line" or "plane" as long as its overall extension direction is a straight line or a plane.

In this application, the design relationships of greater than, less than, or not equal to between parameter values need to exclude reasonable errors of measurement equipment.

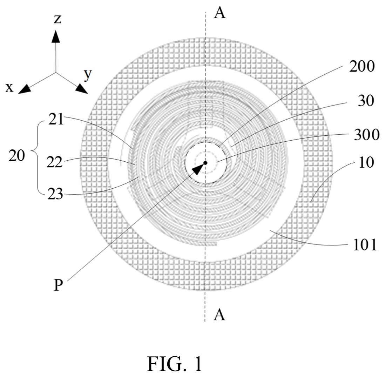

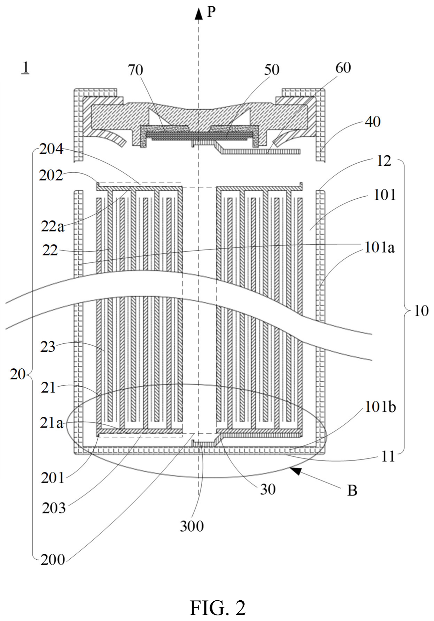

Referring to FIG. 1 and FIG. 2, FIG. 1 is a schematic mounting diagram of a housing, a first conductive plate, and an electrode assembly in a battery 1 (along direction P) according to an embodiment of this application, and FIG. 2 is a cross-sectional view of the battery shown in FIG. 1 along line A-A. The battery 1 includes a housing 10, an electrode assembly 20, and a first conductive plate 30, where as shown in FIG. 2, the housing 10 includes a sidewall 101a and a bottom wall 101b; the sidewall 101a and the bottom wall 101b together enclose a first recess 101; the electrode assembly 20 is disposed in the first recess 101; the electrode assembly 20 includes a first electrode plate 21, a second electrode plate 22, and a separator 23 disposed between the first electrode plate 21 and the second electrode plate 22; the electrode assembly 20 is formed by winding the first electrode plate 21, the second electrode plate 22, and the separator 23 around a winding axis; and one of the first electrode plate 21 and the second electrode plate 22 is a positive electrode plate, and the other is a negative electrode plate. The electrode assembly 20 includes a central portion 200; the first conductive plate 30 includes a main body portion 300 and a plurality of connection portions arranged in an array around the main body portion 300; ends of the connection portions are spaced apart and each are connected to the first electrode plate 21; the main body portion 300 is connected to a bottom of the first recess 101; and along a winding axis direction P, the first conductive plate 30 is disposed between the bottom of the first recess 101 and the electrode assembly 20, and an orthographic projection of the first conductive plate 30 overlaps with an orthographic projection of the central portion 200. Through the arrangement of the plurality of connection portions, the current collection effect can be enhanced, the plurality of connection portions arranged in an array around the main body portion 300 can ensure current uniformity. Additionally, through the connection of the main body portion 300 to the housing 10, an electron flow path is reduced, thereby reducing the internal resistance of the battery and prolonging the service life of the battery.

In embodiments of this application, the central portion 200 of the electrode assembly 20 is coaxially arranged with the winding axis of the electrode assembly 20, and the central portion 200 is approximately a cylindrical region enclosed by an inner layer of the electrode assembly 20. As shown in FIG. 1, the inner layer may be any one of the first electrode plate 21, the second electrode plate 22, or the separator 23, which is not limited in this application.

The winding axis direction P refers to a direction from a current collection end of one electrode plate (one of the first electrode plate and the second electrode plate) to a current collection end of another electrode plate in the wound electrode assembly. In some more specific embodiments, for the cylindrical wound electrode assembly 20 shown in FIG. 2, the winding axis direction of the electrode assembly 20 refers to an axial direction P of the cylindrical electrode assembly 20, that is, a direction of a rotational center axis of the cylinder.

The battery of some embodiments of this application is a full-tab cylindrical battery. The orthographic projection of the first conductive plate 30 overlapping with the orthographic projection of the central portion 200 means that when observed along the winding axis direction P, a projection of the first conductive plate 30 covers a projection of the central portion 200 or the projection of the central portion 200 falls within the projection of the first conductive plate 30.

In some embodiments, referring to FIG. 1, when observed along the winding axis direction P, an orthographic projection of the main body portion 300 overlaps with the orthographic projection of the central portion 200, so that the plurality of connection portions are axially symmetric with respect to the central portion 200, further improving current uniformity.

In some embodiments, when observed along the winding axis direction P, the plurality of connection portions are all spaced apart from the central portion 200, that is, a projection of the main body portion 300 is located within the projection of the central portion 200, so that an orthographic projection of a cross-section of the first conductive plate 30 perpendicular to the winding axis direction P is distributed from a center to an edge (innermost and outermost layers of the electrode assembly 20), facilitating electrolyte infiltration effect of the electrode assembly 20 from the center to the edge.

Referring to FIG. 2, along the winding axis direction P, the electrode assembly 20 includes a first end 201 and a second end 202 opposite the first end 201, where the first end 201 faces the first conductive plate 30, the first end 201 includes a first surface 21a formed on the first electrode plate 21, and the second end 202 includes a second surface 22a formed on the second electrode plate 22. A foil of the first electrode plate 21 is exposed from the first end 201 of the electrode assembly 20 and is kneaded flat after winding to form the first surface 21a. The plurality of connection portions on the first conductive plate 30 are connected to the first electrode plate 21 at the first surface 21a.

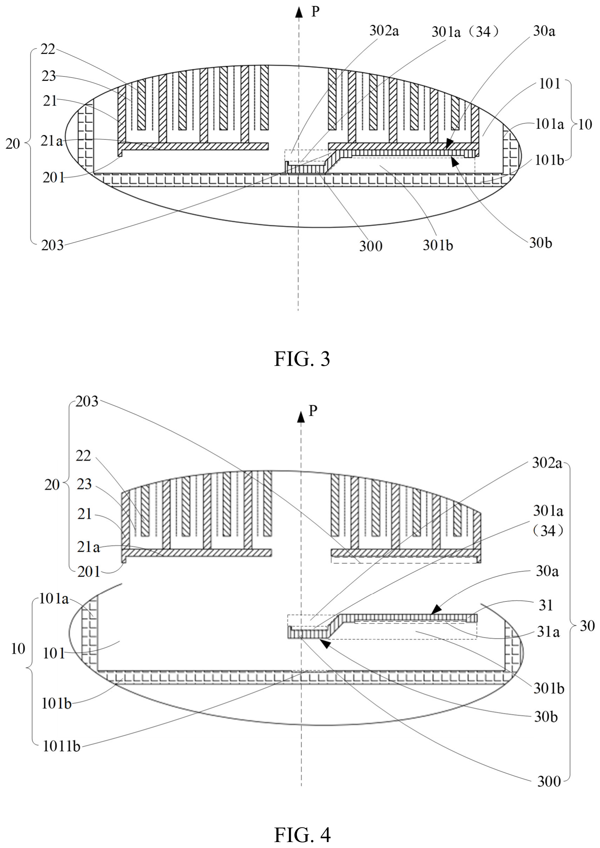

In some embodiments, referring to FIG. 3 and FIG. 4, the electrode assembly 20 further includes a second recess 203, the second recess 203 is disposed on the first surface 21a, and the plurality of connection portions are connected to the first electrode plate 21 at the second recess 203.

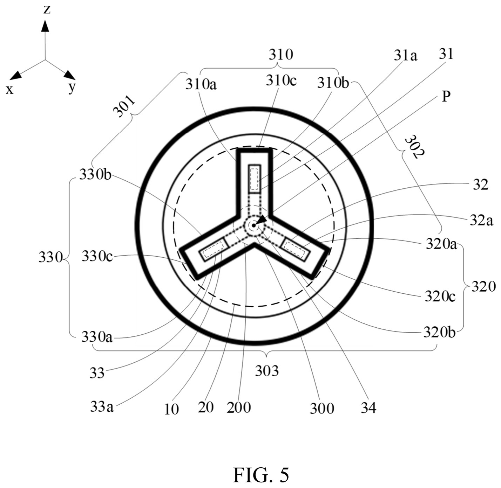

In some embodiments, referring to FIG. 5, the plurality of connection portions of the first conductive plate 30 include a first connection portion 31, a second connection portion 32, and a third connection portion 33, where the first connection portion 31, the second connection portion 32, and the third connection portion 33 are arranged in an array around the main body portion 300; and when observed along the winding axis direction P, the first connection portion 31, the second connection portion 32, and the third connection portion 33 are all spaced apart from the central portion 200.

In some other embodiments, the plurality of connection portions of the first conductive plate 30 may also include two connection portions, four connection portions, five connection portions, or the like. This is not limited in this application, as long as the implementations that can ensure current uniformity and reduce the internal resistance of the battery fall within the protection scope of this application.

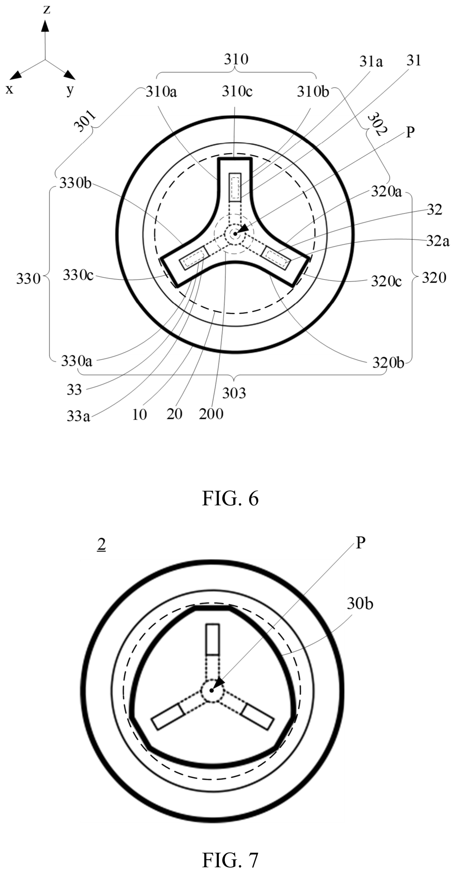

In some embodiments, the plurality of connection portions are welded to the first electrode plate 21, that is, the first connection portion 31, the second connection portion 32, and the third connection portion 33 are all welded to the first electrode plate 21, and the welding method includes laser welding. Specifically, the first connection portion 31, the second connection portion 32, and the third connection portion 33 are all welded to the first electrode plate 21 at the second recess 203. The second recess 203 is formed on the first electrode plate 21 when the plurality of connection portions are welded to the first electrode plate 21; and two, three, or more second recesses 203 may be provided, specifically corresponding to the number of connection portions. For example, in some embodiments of this application, three connection portions are provided, namely the first connection portion 31, the second connection portion 32, and the third connection portion 33; and accordingly, the three second recesses 203 are provided. Correspondingly, as shown in FIG. 5 and FIG. 6, after the first connection portion 31, the second connection portion 32, and the third connection portion 33 are respectively welded to the first electrode plate 21, a recess 31a, a recess 32a, and a recess 33a are correspondingly formed.

In some embodiments, as shown in FIG. 3, along the winding axis direction P, the first conductive plate 30 includes a first face 30a and a second face 30b opposite the first face 30a, where the first face 30a faces the first surface 21a, and the first face 30a is provided with a third recess 301a.

In some embodiments, the first conductive plate 30 further includes a welding portion 34, where the welding portion 34 is configured to connect to the housing 10, so that the housing 10 itself is an electrode. In some embodiments of this application, the welding portion 34 is located on the main body portion 300, and the welding portion 34 is connected to the bottom of the first recess 101 of the housing 10. Specifically, the welding portion 34 is connected to the bottom wall 101b of the housing 10 to achieve connection of the welding portion 34 to the bottom of the first recess 101 of the housing 10.

In some embodiments, the welding portion 34 is a weld mark. The weld mark is located at the third recess 301a, and the welding portion 34 is welded to the bottom of the first recess 101 to form the third recess 301a. Specifically, the welding portion 34 is welded to the bottom wall 101b of the housing 10 to form the third recess 301a on the first conductive plate 30. Correspondingly, as shown in FIG. 4, a recess 1011b is correspondingly formed on the bottom wall 101b of the housing 10.

In some embodiments, the welding portion 34 and the plurality of connection portions are located in the same plane (not shown), thereby making the battery structure compact and increasing the energy density of the battery. On the other hand, the compact structure makes it difficult for the electrolyte to infiltrate and affects the welding of the first conductive plate 30 to the housing 10.

In some embodiments of this application, along any one of a first direction z, a second direction y, and a third direction x, the welding portion 34 and the plurality of connection portions are located in different planes, which facilitates electrolyte infiltration and also facilitates welding of the housing 10 to the first conductive plate 30, as shown in FIG. 3.

Specifically, along the winding axis direction P, the welding portion 34 is inclined toward a bottom 11 of the housing 10, that is, the welding portion 34 is inclined toward the bottom wall 101b of the housing 10; the first face 30a of the first conductive plate 30 is provided with a fourth recess 302a; the second face 30b of the first conductive plate 30 is provided with a fifth recess 301b at a position corresponding to the second recess 203; and the main body portion 300 is located at the fourth recess 302a. This structure facilitates welding of the first conductive plate 30 to the housing 10 and allows for the formation of a buffer region between the electrode assembly 20 and the housing 10. Thus, this facilitates subsequent pressure release of the electrode assembly 20; and in addition, during impact or drop of the battery, this buffer region can reduce the risk of battery failure.

When the housing 10 is a positive electrode, the material of the housing 10 may be an aluminum alloy, such as an aluminum-plastic film. At this time, the first conductive plate 30 may be made of materials such as aluminum or nickel, and the first electrode plate 21 is a positive electrode plate; and when the housing 10 is a negative electrode, the material of the housing 10 may be steel. At this time, the first conductive plate 30 may be made of materials such as copper, steel, or nickel; and the first electrode plate 21 is a negative electrode plate.

The positive electrode plate includes a positive electrode current collector and a positive electrode active material applied on the positive electrode current collector, where the positive electrode current collector may be aluminum foil, nickel foil, or stainless steel foil. The positive electrode active material includes a positive electrode material capable of absorbing and releasing lithium (Li). Examples of the positive electrode materials capable of absorbing/releasing lithium (Li) may include lithium cobalt oxide, lithium nickel cobalt manganese oxide, lithium nickel cobalt aluminate, lithium manganese oxide, lithium manganese iron phosphate, lithium vanadium phosphate, lithium vanadium oxide phosphate, lithium iron phosphate, lithium titanate, and lithium-rich manganese-based materials.

The negative electrode plate includes a negative electrode current collector and a negative electrode active material applied on the negative electrode current collector, the negative electrode current collector may be copper foil, and the negative electrode active material includes a negative electrode material capable of absorbing and releasing lithium (Li). Examples of the negative electrode materials capable of absorbing/releasing lithium (Li) may include a carbon material, a metal compound, an oxide, a sulfide, a lithium nitride such as LiN3, a lithium metal, a metal that forms alloys with lithium, and a polymer material. Examples of the carbon material may include low-graphitized carbon, easily graphitized carbon, artificial graphite, natural graphite, mesocarbon microbeads, soft carbon, hard carbon, pyrolytic carbon, coke, glassy carbon, an organic polymer compound sintered body, carbon fiber, and activated carbon. The coke may include pitch coke, needle coke, and petroleum coke. The organic polymer compound sintered body refers to a material obtained by calcining a polymer material such as phenolic plastic or furan resin at an appropriate temperature to carbonize it, and some of these materials are classified into low-graphitized carbon or easily graphitized carbon. Examples of the polymer material may include polyacetylene and polypyrrole.

The separator 23 may be selected from one of a polyethylene (PE) film and a polypropylene (PP) film.

In some embodiments, as shown in FIG. 5, the first conductive plate 30 further includes a first region 310, a second region 320, and a third region 330, where the first region 310 extends from the main body portion 300 along a first direction z perpendicular to the winding axis direction P, the second region 320 extends from the main body portion 300 along a second direction y perpendicular to the winding axis direction P, and the third region 330 extends from the main body portion 300 along a third direction x perpendicular to the winding axis direction P. The first connection portion 31 is located in the first region 310, the second connection portion 32 is located in the second region 320, and the third connection portion 33 is located in the third region 330.

In some embodiments, an angle between any two of the first direction z, the second direction y, and the third direction x is an obtuse angle, which is conducive to reducing electrolyte accumulation.

In some embodiments, the angle between any two of the first direction z, the second direction y, and the third direction x is 120 degrees, so that the first connection portion 31, the second connection portion 32, and the third connection portion 33 have rotational symmetry with respect to the main body portion 300, resulting in more balanced stress after welding, and preventing stress from being generated.

In some embodiments, as shown in FIG. 5, the first region 310 includes a first edge 310a extending along the first direction z, a second edge 310b spaced apart from the first edge 310a and extending along the first direction z, and a third edge 310c connected between the first edge 310a and the second edge 310b; the second region 320 includes a fourth edge 320a connected to the second edge 310b and extending along the second direction y, a fifth edge 320b spaced apart from the fourth edge 320a and extending along the second direction, and a sixth edge 320c connected the fourth edge 320a and the fifth edge 320b; and the third region 330 includes a seventh edge 330a connected to the fifth edge 320b and extending along the third direction x, an eighth edge 330b spaced apart from the seventh edge 330a and connected to the first edge 310a, and extending along the third direction, and a ninth edge 330c connected between the seventh edge 330a and the eighth edge 330b. Limiting the shapes of the first region 310, the second region 320, and the third region 330 is conducive to reducing electrolyte accumulation.

In some embodiments, referring to FIG. 6, the first conductive plate 30 includes a first conductive edge 301, a second conductive edge 302, and a third conductive edge 303, where the first conductive edge 301 includes the first edge 310a and the eighth edge 330b, the second conductive edge 302 includes the second edge 310b and the fourth edge 320a, and the third conductive edge 303 includes the fifth edge 320b and the seventh edge 330a. In this manner, the first conductive edge 301, the second conductive edge 302, and the third conductive edge 303 have rotational symmetry with respect to the main body portion 300, further enhancing current uniformity.

Along the winding axis direction P, the first conductive edge 301, the second conductive edge 302, and the third conductive edge 303 are all recessed toward the main body portion 300 to reduce sharp portions of the first conductive plate 30 and reduce burrs, facilitating the subsequent flow of an electrolyte.

In some embodiments, referring to FIG. 6, the first conductive edge 301, the second conductive edge 302, and the third conductive edge 303 are all arc-shaped structures, which facilitate electrolyte infiltration.

In some embodiments, as shown in FIG. 2, the battery 1 further includes a cap 40, a pole 50, a second conductive plate 60, and an insulating member 70, where the cap 40 is disposed on a top 12 of the housing 10 to seal the first recess 101, the pole 50 is disposed on the cap 40 and partially exposed from the cap 40, one end of the second conductive plate 60 is connected to the pole 50, another end of the second conductive plate 60 is connected to the second electrode plate 22, and the insulating member 70 is disposed between the cap 40 and the pole 50 to electrically insulate the two and insulate the pole 50 from the housing 10.

The second conductive plate 60 has a structure similar to that of the first conductive plate 30. Details are not repeated in this application.

A foil of the second electrode plate 22 is exposed from the second end 202 of the electrode assembly 20 and is kneaded flat after winding to form the second surface 22a, and the plurality of connection portions on the second conductive plate 60 are welded to the second electrode plate 22 at the second surface 22a.

In some embodiments, as shown in FIG. 2, the electrode assembly 20 further includes a sixth recess 204, where the sixth recess 204 is disposed on the second surface 22a, and the plurality of connection portions on the second conductive plate 60 are welded to the second electrode plate 22 at the sixth recess 204. The sixth recess 204 is formed when the plurality of connection portions on the second conductive plate 60 are welded to the second electrode plate 22.

In some embodiments, the cap 40 is a metal material piece, which may be made of the same material as the housing 10, that is, the cap is configured as a single metal piece, an alloy piece, or a composite material piece. In some embodiments where the cap 40 is configured as a composite material piece, the composite material piece includes at least one conductive metal material.

In some embodiments, the material of the insulating member 70 may be plastic, such as polypropylene.

In some embodiments, the battery 1 further includes an explosion-proof valve, where the explosion-proof valve is disposed between the second conductive plate 60 and the cap 40 for pressure relief when the internal pressure of the battery 1 is excessive to prevent an explosion. Persons skilled in the art can select an appropriate connection method for the explosion-proof valve and the second conductive plate according to needs. This is not limited in this application.

In another embodiment, the first conductive plate may alternatively have a structure as shown in FIG. 7, differing from the battery 1 in some embodiments of this application in the structure of the first conductive plate. The first conductive plate 30b in the battery 2 shown in FIG. 7 has a large area. The advantages are as follows: the first conductive plate 30b can be die-cut as a whole and easily processed; the large area results in few assembly errors; and the edges of the first conductive plate are smooth with few burrs, making it less likely to pierce the housing. The disadvantage is as follows: the first conductive plate 30b is not conducive to electrolyte infiltration.

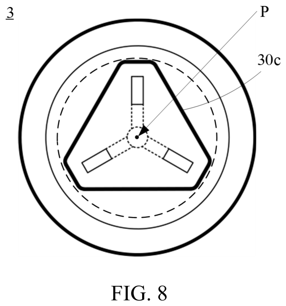

In other embodiments, the first conductive plate may alternatively have a structure as shown in FIG. 8, differing from the battery 1 in some embodiments of this application in the structure of the first conductive plate. The first conductive plate 30c in the battery 3 shown in FIG. 8 has many edge corners and burrs. This makes it easy to pierce the housing and is not conducive to prolonging the service life of the battery.

According to the battery of some embodiments of this application, the arrangement of the plurality of connection portions can enhance the current collection effect. The plurality of connection portions arranged in an array around the main body portion can ensure current uniformity. Additionally, through the connection of the main body portion to the housing, an electron flow path is shortened, thereby reducing the internal resistance of the battery and prolonging the service life of the battery. Additionally, when the battery of some embodiments of this application is compared with the batteries shown in FIG. 7 and FIG. 8, although the first conductive plate of this application has sharp corners, the first conductive edge, the second conductive edge, and the third conductive edge adopt arc-shaped structures with few burrs, ensuring effective electrolyte infiltration while making it less likely to pierce the housing. The functional modules in some embodiments of this application can be arbitrarily combined without mutual contradiction to obtain more different embodiments. Based on the functions or advantageous aspects corresponding to each functional module described in some embodiments of this application, persons skilled in the art can selectively use one or more of the above functional modules in the battery according to actual needs to obtain a battery with corresponding functions or advantageous aspects.

It should be noted that the specification and accompanying drawings of this application provide preferred embodiments of this application. However, this application may be implemented in many different manners, and is not limited to some embodiments described in the specification. These embodiments are not intended as additional limitations on the content of this application. These embodiments are provided to clearly and completely describe this application. In addition, the foregoing technical features are further combined with each other to form various embodiments not listed above, which are construed as falling within the scope of the specification of this application. Further, persons of ordinary skill in the art can make improvements or transformations according to the above description, and all these improvements and transformations should fall within the protection scope of the appended claims of this application.

## Claims

1. A battery, comprising:
a housing comprising a first recess;
an electrode assembly disposed in the first recess, the electrode assembly comprising a first electrode plate, a second electrode plate, and a separator disposed between the first electrode plate and the second electrode plate, wherein the electrode assembly is formed by winding the first electrode plate, the second electrode plate, and the separator around a winding axis, and the electrode assembly comprises a central portion; and
a first conductive plate comprising a main body portion and a plurality of connection portions arranged in an array around the main body portion, ends of the connection portions being spaced apart and each connected to the first electrode plate;
wherein the first conductive plate is connected to a bottom of the first recess; and along a winding axis direction, the first conductive plate is disposed between the bottom of the first recess and the electrode assembly, and an orthographic projection of the first conductive plate overlaps with an orthographic projection of the central portion.

2. The battery according to claim 1, wherein
along the winding axis direction, an orthographic projection of the main body portion overlaps with the orthographic projection of the central portion.

3. The battery according to claim 1, wherein
along the winding axis direction, the plurality of connection portions are all spaced apart from the central portion.

4. The battery according to claim 1, wherein
the plurality of connection portions are welded to the first electrode plate.

5. The battery according to claim 1, wherein
along the winding axis direction, the electrode assembly comprises a first end, the first end faces the first conductive plate, and the first end comprises a first surface formed on the first electrode plate.

6. The battery according to claim 5, wherein
the electrode assembly comprises a second recess, the second recess is disposed on the first surface, and the plurality of connection portions are connected to the first electrode plate at the second recess.

7. The battery according to claim 5, wherein
along the winding axis direction, the first conductive plate comprises a first face, the first face faces the first surface, and the main body portion is located on the first face.

8. The battery according to claim 7, wherein
the first face is provided with a third recess.

9. The battery according to claim 8, wherein
the first conductive plate further comprises a welding portion, the welding portion is located on the main body portion, and the welding portion is connected to the bottom of the first recess at the third recess.

10. The battery according to claim 1, wherein
the plurality of connection portions of the first conductive plate comprise a first connection portion, a second connection portion, and a third connection portion, and the first connection portion, the second connection portion, and the third connection portion are arranged in an array around the main body portion.

11. The battery according to claim 10, wherein
the first conductive plate comprises a first region, a second region, and a third region, wherein the first region extends from the central portion along a first direction perpendicular to the winding axis direction, the second region extends from the central portion along a second direction perpendicular to the winding axis direction, the third region extends from the central portion along a third direction perpendicular to the winding axis direction, the first connection portion is located in the first region, the second connection portion is located in the second region, and the third connection portion is located in the third region.

12. The battery according to claim 11, wherein
an angle between any two of the first direction, the second direction, and the third direction is an obtuse angle.

13. The battery according to claim 12, wherein
the angle between any two of the first direction, the second direction, and the third direction is 120 degrees.

14. The battery according to claim 11, wherein
the first region comprises a first edge extending along the first direction, a second edge spaced apart from the first edge and extending along the first direction, and a third edge connected between the first edge and the second edge;
the second region comprises a fourth edge connected to the second edge and extending along the second direction, a fifth edge spaced apart from the fourth edge and extending along the second direction, and a sixth edge connected between the fourth edge and the fifth edge; and
the third region comprises a seventh edge connected to the fifth edge and extending along the third direction, an eighth edge spaced apart from the seventh edge and connected to the first edge and extending along the third direction, and a ninth edge connected between the seventh edge and the eighth edge.

15. The battery according to claim 14, wherein
the first conductive plate comprises a first conductive edge, a second conductive edge, and a third conductive edge;
the first conductive edge comprises the first edge and the eighth edge, the second conductive edge comprises the second edge and the fourth edge, and the third conductive edge comprises the fifth edge and the seventh edge; and
along the winding axis direction, the first conductive edge, the second conductive edge, and the third conductive edge are all recessed toward the main body portion.

16. The battery according to claim 9, wherein
the welding portion and the connection portion are located in the same plane.

17. The battery according to claim 9, wherein
the welding portion and the connection portion are located in different planes.

18. The battery according to claim 17, wherein
along the winding axis direction, the welding portion is inclined toward a bottom of the housing.

19. The battery according to any one of claims 1 to 18, further comprising
a cap disposed on a top of the housing to seal the first recess, the cap being provided with a pole;
a second conductive sheet, one end of the second conductive sheet being connected to the pole, and another end of the second conductive sheet being connected to the second electrode plate; and
an insulating member disposed between the cap and the pole.
